# EUROPEAN PATENT SPECIFICATION

(11) **EP 3 587 188 B1**
(45) Date of publication and mention of the grant of the patent: **31.08.2022**
(21) Application number: 19181125.6
(22) Date of filing: 19.06.2019
(51) Int. Cl.: B60R 9/055, E05B 63/14

(54) **ROOF BOX WITH LOCKING SYSTEM**
DACHKOFFER MIT SCHLIESSSYSTEM
COFFRE DE TOIT AVEC SYSTÈME DE VERROUILLAGE

(30) Priority: 27.06.2018 NL 2021189
(43) Date of publication of application: 01.01.2020
(73) Proprietor: VDL Hapro B.V., 4421 RR Kapelle (NL)
(72) Inventor: VAN TILBURG-NIEUWENHUIZE, Cornelia Maria Jacobus, 4421 RR Kapelle (NL); MEISSNER, Michael, 4421 RR Kapelle (NL)
(74) Representative: Algemeen Octrooi- en Merkenbureau B.V.

(56) References cited:
- EP-A1- 0 718 155
- EP-A1- 2 322 382
- EP-A1- 3 112 217

## Description

The invention relates to a roof box provided with a bottom part, a lid part, as well as a first locking system and a second locking system at some distance from the first locking system, both of which comprise a locking function for locking and unlocking the bottom part with the lid part, the first locking system and the second locking system being connected together by a slidable oblong connecting element.

EP 3 112 217 A1 disclosed a roof box according to the preamble of claim 1.

A roof box is also known from EP 2 322 382. By rotating a key through an angle of for example 45 degrees, this roof box can unlock the first and second locking system to open the roof box. For this purpose, an oblong connecting element in the form of interconnected rods is used in the roof box. A disadvantage of the known roof box is that the user has to exert a relatively large force on the key to open the roof box by displacing the oblong connecting element. Owing to the relatively large forces that have to be exerted on the key, the key may become damaged, for example warped, through repeated use, so that finally the roof box is even more difficult to open with the key, or even can no longer be opened.

Furthermore, there is a risk that a user might forget to close the roof box with the key, so that the user might drive off with an open roof box. This may give rise to undesirable situations, for example through the roof box being blown open completely while driving, so that luggage may be lost from the roof box, which could be dangerous for other road users. Moreover, with the roof box open, the luggage may be exposed to the effects of the weather, especially precipitation, which is also normally undesirable.

Consequently, an object of the present invention is to provide a roof box with which the aforesaid drawbacks are prevented or in any case are minimized.

This object of the invention is achieved with a roof box as defined in the independent claim 1.

The roof box is provided with a bottom part, a lid part, as well as a first locking system and a second locking system at some distance from the first locking system, both of which comprise a locking function for locking and unlocking the bottom part with the lid part. The first locking system and the second locking system are connected together by a slidable oblong connecting element, wherein the first or the second locking system is provided with a handgrip coupled to the slidable connecting element, which when operated by a user, can be rotated about an axis from a first position in which the bottom part and the lid part are locked together by means of the first locking system and the second locking system, to a second position whereby the slidable oblong connecting element moves from a locking position to an unlocking position for unlocking the first and the second locking system so that the bottom part is unlocked from the lid part. The oblong handgrip comprises an end located near the axis as well as an end located farther from the axis, wherein in the unlocked position of the first and/or the second locking system, the handgrip is blocked in the second position.

By means of a handgrip of this kind, an ergonomic user-friendly roof box is provided for the user. The oblong handgrip configured as a handle requires relatively little force from a user for operation, owing to the lever mechanism with respect to the axis about which the handgrip is rotated between a first and second position. By means of the handgrip, a relatively small force combined with a large movement is converted into a small movement that provides a relatively large force, required *inter alia* for opening the locking systems. By minimizing the force to be exerted by a user for unlocking the locking systems, in addition the life of the locking and unlocking mechanism of the roof box can be extended, because the chance of damaging the handgrip is minimized, since only a minimum force is necessary for operation.

The lever provided by the handgrip makes the roof box not only more user-friendly, but also provides an additional warning aid for the user that the lid part and the bottom part of the roof box are not closed properly. If the lid part and the bottom part of the roof box are not closed properly, the handgrip is in the second blocked position, which on account of the oblong shape of the handgrip is a visually quickly recognizable position, so that the user, even at a relatively large distance from the roof box, can establish visually, with a simple glance at the roof box, whether the roof box is closed properly. In the first position of the handgrip, through rotation about the axis, the handgrip assumes a different orientation than in the second position of the handgrip. The first position may for example be a substantially horizontal position of the oblong handgrip relative to the axis, whereas the second position may be a substantially vertical position of the oblong handgrip. It is special for the roof box, that in the first position the end of the handgrip remote from the axis occupies a clearly different position, for example higher or lower position relative to the axis, than the position of this end in the second position. By means of this warning aid in the form of a handgrip, a user can recognize visually, relatively quickly and easily, that the roof box is not closed or in any case that the locking systems are not locked correctly.

In an advantageous embodiment, in the first position of the handgrip the distance between a side wall of the roof box and an end of the handgrip remote from the axis is less than in the second position of the handgrip.

This second position projecting (further) relative to a side wall makes it visually clearly perceptible for a user that the roof box is not closed correctly, so that the chance of a user driving off with an open roof box will be reduced even further.

In the first position, the handgrip preferably extends in the plane of the side wall. This first position is not only clearly perceptible, but also offers aerodynamic advantages when driving a vehicle with the roof box. In the second position the handgrip extends at an angle relative to the side wall of the roof box, preferably an angle between 20 and 90 degrees relative to the side wall of the roof box. Such an angle in the second position of the handgrip quickly makes it clear to a user that the roof box is not closed properly, so that the user can lock the locking systems of the roof box before driving off.

In a particular aspect of the roof box, there are two opposite side walls of the roof box, each provided with the first and the second locking system, wherein the first and the second locking system on each side wall further comprise a hinge function so that the lid part on one of the two side walls can be pivoted via the hinge function of the first and the second locking system on the side wall located opposite relative to the bottom part for opening/closing the roof box.

Owing to the dual function of the locking systems, namely hinge function and locking/unlocking function, the roof box can be opened and closed from both side walls, which further increases the ease of use of the roof box, as the roof box is accessible for a user from two long sides of the vehicle, for example for putting luggage in the roof box fixed on the roof of the vehicle.

It is further possible that the roof box further comprises a third locking system, wherein the first and the third locking system are of identical configuration and the second locking system is of a different configuration from the first locking system, in that the second locking system is provided with the handgrip.

Particularly with roof boxes with a relatively large length dimension, it may be desirable to use more than two locking systems. The more locking systems are used for locking/unlocking, the larger the forces become that are required for moving the oblong connecting element between the locking position and unlocking position, among other things for unlocking the locking systems. Through the use of the handgrip, this extra effort when using more than two locking systems is barely noticeable for a user.

By locking, by means of at least the first locking system and the second locking system, the bottom part with the lid part, by closing the open roof box the handgrip can be moved automatically or manually from the second position to the first position.

The automatic variant provides a handgrip that is user-friendly, whereas the manual variant can give the user confirmation that the roof box is locked correctly, so that the user can drive off with a feeling of safety. For the manual variant it is therefore important that with a roof box correctly locked, the blocking in the second position should be removed so that the user can move the handgrip back to the first position.

If the bottom part is unlocked from the lid part, the handgrip is blocked in the second position by means of spring tension and/or the slidable oblong connecting element.

Blocking of this kind prevents the handgrip being moved back to the first position without locking the locking systems.

Operating the handgrip by rotation from the first position to the second position provides simultaneous unlocking of at least the first and the second locking system by means of the slidable oblong connecting element, and complete closing of the open roof box provides simultaneous locking of at least the first and the second locking system by means of the slidable oblong connecting element.

"Simultaneous" means that the locking systems are locked or unlocked at the same time or almost at the same time. The unlocking or locking of the locking systems may be accompanied by an audible click, so that for a user it is also perceptible by sound that the locking systems of the roof box are unlocked or locked.

In a particular aspect, the handgrip can be closed in the first position by means of a lock, wherein if the handgrip is locked by means of the lock, movement of the handgrip from the first to the second position does not provide unlocking of the lid part and the bottom part.

With the lock, primarily the roof box can be locked, for example with a key, so that access to the contents of the roof box is impossible for unauthorized persons, or in any case is limited. The lock in the roof box described herein additionally has the advantage that if locked therewith, the handgrip can be uncoupled from the slidable oblong connecting element, so that operation of the handgrip can no longer cause unlocking of the locking systems. Accordingly, anyone, for example a fellow passenger, without being in possession of the key of the lock, can establish whether the roof box is closed simply by moving the handgrip.

If the handgrip is locked by means of the lock, the handgrip, moved by a user from the first position to the second position, moves automatically by spring tension from the second position to the first position.

This prevents the handgrip remaining stuck in the second position when a lock is locked, which could not only have undesirable aerodynamic effects while driving, but might also cause confusion for the users that the locking systems are not locked. Automatic spring-back of the locked handgrip therefore provides a user-friendly roof box.

The lock is provided with a lock component with a catch that is located movably in a slot of a coupling part between the handgrip and the connecting element, wherein by closing the lock, the catch is moved in the slot to an uncoupling position so that the handgrip and the connecting element are uncoupled, whereas opening the lock moves the catch in the slot to a coupling position so that the handgrip and the connecting element are coupled prior to opening the roof box by operation of the handgrip by a user.

This relatively simple configuration of the lock provides reliable coupling and uncoupling of the handgrip with the connecting element.

The aspects described above will be explained hereunder on the basis of a number of embodiment examples, in combination with the figures. The invention is not, however, limited to the embodiment examples described hereunder. Rather, a number of variants and modifications are possible, which also make use of the idea of the invention and consequently fall within the scope of protection. In particular, we may mention the possibility of combining the features/aspects that are mentioned individually in the description and/or shown in the figures, with the features of the claims in so far as they are compatible. The scope of protection for the invention is defined by the appended claims.
Fig. 1 shows a schematic representation of a roof box;
Figs. 2a-c show the action of locking systems of the roof box;
Fig. 3 shows an exploded view of a centrally located locking system of the roof box shown in Figs. 2a-c;
Fig. 4 shows an exploded view of one of the other two locking systems of the roof box shown in Figs. 2a-c;
Figs. 5a,b show details of the centrally located locking system of the roof box in a locked and closed state;
Figs. 6a,b show details of the centrally located locking system of the roof box in a locked and non-closed state;
Figs. 7a,b show details of the centrally located locking system of the roof box in an unlocked and non-closed state.

In the figures, the same components are given the same reference signs.

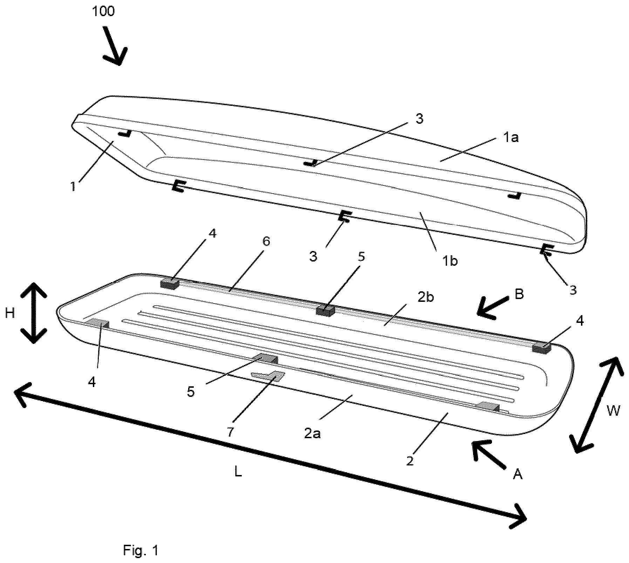

Fig. 1 shows schematically a roof box 100. The roof box 100 shown comprises a length L that is greater than the width W, wherein the width W is greater than the height H of the roof box 100. Preferably the length varies between 1.0 and 5.0 m, the width between 0.5 and 2.0 m and the height between 0.3 and 0.6 m depending on the type of motor vehicle, in particular a passenger car on which the roof box is to be fixed and the desired volume of the roof box 100. It is consequently also possible for the roof box (not shown) to be configured so that the length L and the width W are equal or almost equal.

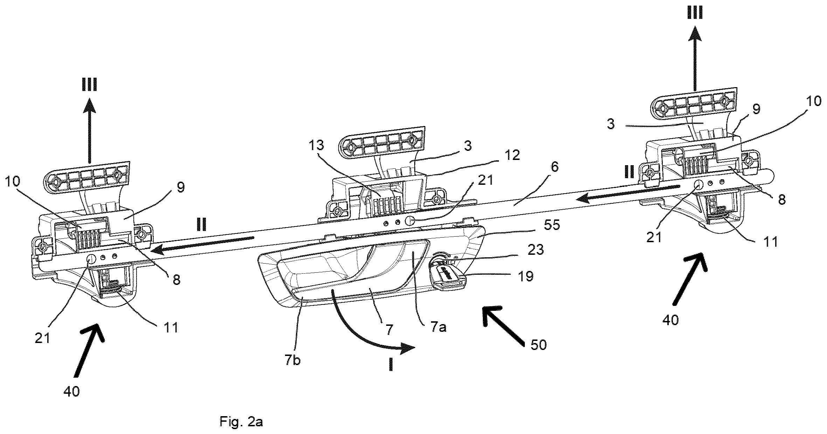

The two-part roof box 100 is provided with a lid part or lid 1 as well as a bottom part 2. As shown in Figs. 2a-c with the reference numbers 40 and 50, the locking system of the roof box 100 comprises three locking systems 40, 50 per long side A, B of the roof box 100. Two of the three locking systems 40 on each long side A, B are of identical configuration and a central locking system 50 located between them differs from the locking systems 40 *inter alia* in that the locking system 50 is provided with an oblong handgrip 7. The locking systems 40, 50 comprise a locking mechanism 4, 5 fastened on the bottom part 2 of the roof box 100 and locking hooks 3 fastened on the lid part 1 of the roof box 100. The locking mechanisms 4, 5 are connected together by means of a slidable connecting element in the form of an oblong strip 6. In principle it is also possible, in a variant not shown, to provide the locking mechanisms in the lid part and provide the locking hooks in the bottom part.

In a locked state of the bottom part 2 with the lid part 1 of the roof box, the locking mechanisms 4, 5 and the locking hooks 3 are not visible from outside. The locking mechanisms 4, 5 and the locking hooks 3 are located inside the roof box 100 and/or are incorporated in the side walls 2a,b, 1a,b of the bottom part 2 and the lid part 1 of the roof box 100.

The locking systems 40, 50 have a locking and hinge function. That is, the locking systems 40, 50 can, by means of the locking hooks 3 and the locking mechanisms 4, 5, lock the bottom part 2 and the lid part 1 together in a closed state of the roof box, and for the hinge function they can be unlocked on a first long side A of the roof box 100 and be locked on the second long side B, wherein the locking hooks 3 of the locked locking systems 40, 50 form a hinge axis on the second long side B, about which the lid part 1 can be pivoted to provide access to the interior of the roof box 100 from the first long side A. It may also be the other way round, i.e. with the locked locking systems 40, 50 forming a hinge axis on the first long side to provide access to the interior of the roof box 100 from the second long side B.

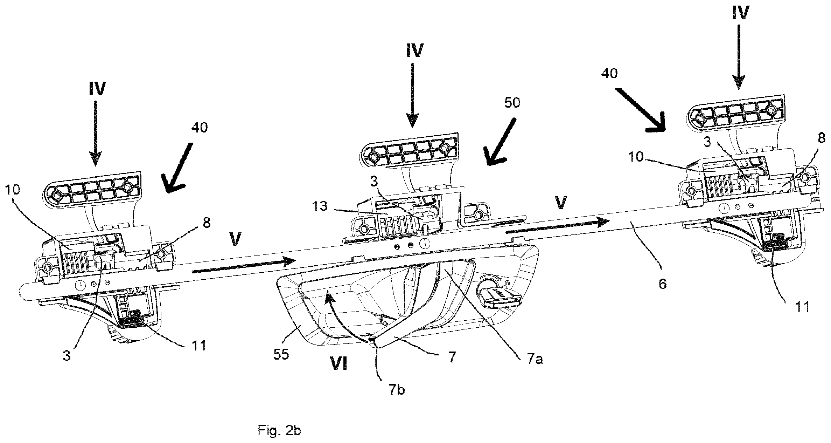

The central locking mechanism 5 is connected to a handgrip mechanism 55 located in the side wall 2a of the bottom part 2, which, as shown in Fig. 1, is provided with an oblong handgrip 7 configured as a handle accessible for a user from outside as well as a lock 23 located some distance from the handgrip 7. The handgrip 7 is pivotable about an axis that is not shown in the figures. The pivoting or turning of the handgrip is shown in Figs. 2a,b by arrows I and VI. The oblong handgrip 7 comprises an end located near the axis 7a as well as an end 7b located farther from the axis. With this form, a user can easily grasp the handgrip 7 with the hand between the ends 7a,7b for operation.

A user can, by means of a key 19 that fits the lock 23, close the lock 23 for deactivating the handgrip mechanism 55, as will be described in more detail below. The handgrip 7 is easy to operate by a user, for example for unlocking and opening the roof box 100 with an activated handgrip mechanism 55.

By means of a number of fasteners, for example screws 22, the locking mechanism 5 located centrally on the inside of the side wall 2a is connected to the handgrip mechanism 55 located partly in the side wall 2a. Even with a closed roof box 100, the handgrip mechanism 55 is partly visible on the outside of the side wall 2a, 1a of the roof box.

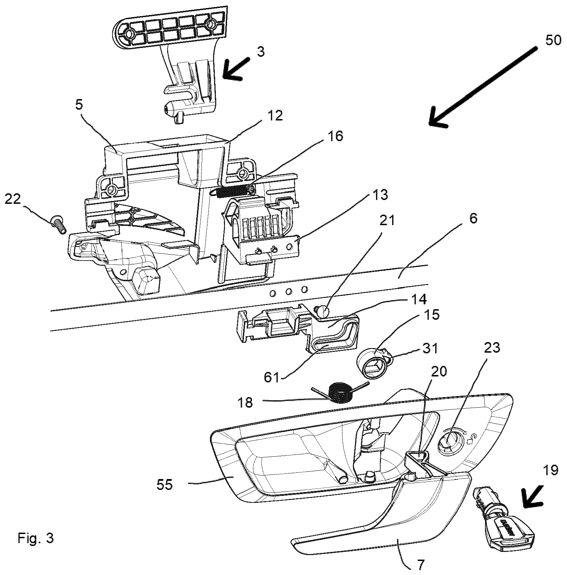

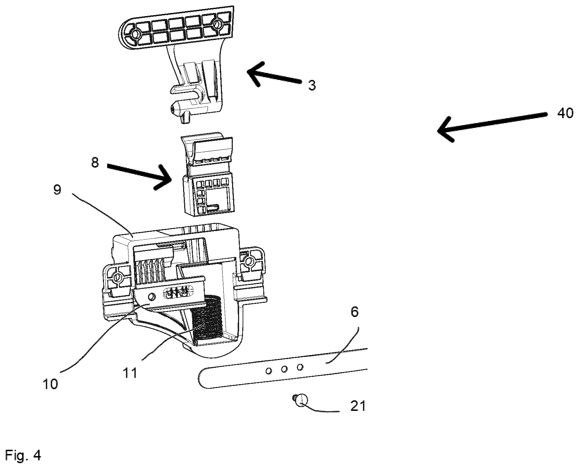

As shown in Figs. 3 and 4, both the outer locking mechanisms 4 and the middle/central locking mechanisms 5 comprise a housing 9, 12, and a sliding part 10, 13. The sliding part 10, 13 has a horizontal guide in the housing 9, 12 and the different sliding parts 10, 13 are connected by means of a fastener, for example a pop rivet 21, to the slidable oblong strip 6.

When the lid 1 is in a closed position with the bottom part 2, the locking hooks 3 are located in the housings 9, 12 and the locking hooks 3 are locked because the slidable strip 6 is in the locking position in which the sliding parts 10, 13 connected to the strip 6 are pushed over the locking hooks 3. In this way the locking systems 40, 50 acquire the locking and hinge function already described above.

From an opened position of the roof box 100, the roof box 100 can be closed by hinging the lid 1. When the lid 1 is being closed by a user, by means of the locking hooks 3 in the outer locking mechanisms 4, a locking component 8 is pushed down. If pressed-in sufficiently, the sliding parts 10 can move over the locking component 8, so that the locking is removed in the longitudinal direction L of the roof box for the sliding parts 10 and the sliding parts 10 can be pushed over the locking hooks 3 for locking the lid 1 and the bottom part 2 of the roof box 100. In the position of the sliding parts 10 pushed over the locking hooks 3, locking occurs between the sliding part 10 and the locking component 8 in the direction of the height H of the roof box 100, which ensures that the locking hooks 3 are not pushed upwards. On manually pushing down the lid 1 and pushing the locking component 8 down via the locking hooks 3, a spring 11 is put under tension.

Opening of the roof box 100 takes place when a user operates the handgrip 7 of the central locking system 50, more particularly by swivelling the handgrip 7 outwards in the direction indicated in Fig. 2a with arrow I from a first position to a second position. The handgrip 7 engages with the coupling component 14 (Fig. 3) if the handgrip mechanism 55 of the roof box 100 is not turned and locked by a user by means of a lock 23 and a key 19. In the opened position of the lock 23, the rotating/turning movement exerted by a user on the handgrip component 20 of the handgrip 7 is converted into a translating movement of the coupling component 14. The coupling component 14 ensures that the sliding part 13 coupled thereto moves aside in the direction indicated by arrows II, so that the locking hook 3 is unlocked in the central locking mechanism 5. Through the connection 21 between the sliding part 13 and the strip 6 there is also a simultaneous displacement of the strip 6 in the direction indicated by arrows II in Fig. 2a. Through this displacement of the strip 6, the sliding parts 10 in the outer locking systems 40 are moved simultaneously in the direction indicated by arrow II. By moving the sliding parts 10 in the longitudinal direction L of the roof box 100 in the direction indicated by arrow II, the locking in the height direction H of the roof box with the locking component 8 of the outer locking systems 40 is removed and the spring 11 ensures that the locking component 8 moves upwards in the height direction H and so, via the locking hooks 3, pushes the lid 1 upwards in the direction indicated by arrows III (Fig. 2a), which gives visual feedback of opening of the roof box. There is also auditory feedback for a user, with an audible click produced by unlocking the locking hooks 3 of the locking systems 40, 50 on movement of the handgrip 7 from the first (Fig. 2a) to the second position (Fig. 2b).

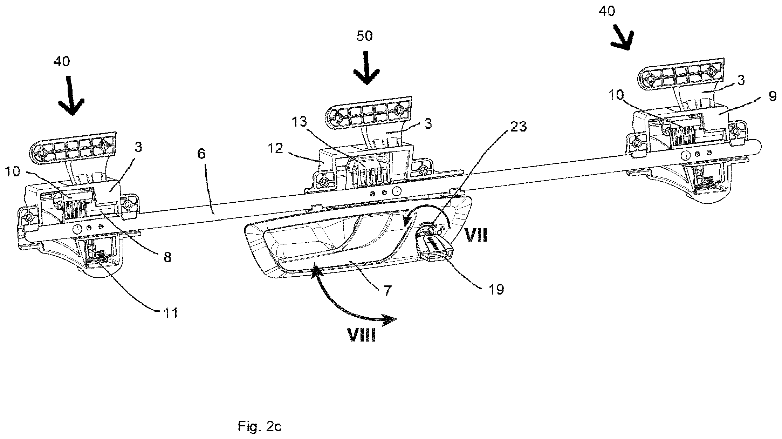

On rotating the handgrip 7 in the direction indicated by arrow I when opening the roof box 100, a torsion spring 18 is put under tension via the handgrip part 20 and through the translating movement that the turning of the handgrip 7 brings about on the coupling part 14 just as on the sliding part 13, a housing spring 16 (Fig. 3) in the housing 12 is also put under tension. Through the lever mechanism of the handgrip 7, rotating the handgrip 7 in the direction indicated by arrow I requires minimal force from a user. These two springs 16, 18 ensure that on removing the locking of the sliding parts in the longitudinal direction L of the roof box, thus on closing the roof box wherein the locking hooks are moved in the direction indicated by arrows IV (Fig. 2b), the strip 6 with sliding parts 10, 13 can again move in the longitudinal direction L of the roof box 100 under spring tension in the direction indicated by arrows V and can thus lock the roof box 100. Then a rotation of the handgrip in a direction indicated by the arrow VI takes place automatically, from the second position (Fig. 2b) to the first position (Figs. 2a, 2c) of the handgrip 7. By locking the bottom part with the lid part by means of the locking systems 40, 50, for example through exertion of a manual force by a user on the roof box in the direction indicated by the arrows IV, handgrip 7 is moved automatically from the second position to the first position. This automatic return movement of the handgrip 7 from the second position to the first position is provided in the embodiment example shown in the figures by the coupling between coupling part 14 in which handgrip part 20 is fastened and the sliding part 13 connected to the strip. Movement of the strip 6 in the direction indicated by arrow V thereby provides movement of the handgrip 7 in the direction indicated by arrow VI from the second position to the first position.

The coupling between coupling part 14 in which handgrip part 20 is fastened and the sliding part 13 connected to the strip ensures that if the box is opened, the handgrip 7 is blocked in the second position. This means that the handgrip 7 provides a warning aid for the user that the lid part 1 and bottom part 2 of the roof box are not closed properly. On account of the oblong shape of the handgrip 7, the second position is a visually quickly recognizable position for a user because in the first position of the handgrip, the distance between a side wall 2a,b, 1a,b of the roof box and the end 7b of the handgrip located far from the axis is zero or almost zero and in the second position of the handgrip the distance between a side wall 2a,b, 1a,b of the roof box and the end 7b of the handgrip located far from the axis is a clearly visible distance of for example some centimetres. In other words in the first position the handgrip extends in the plane of the side wall 2a,b, 1a,b, wherein the handgrip in the second position extends relative to the side wall 2a,b, 1a,b of the roof box at an angle, see arrow VI, preferably an angle between 20 and 90 degrees relative to the side wall 2a,b, 1a,b of the roof box 100. If the lid 1 is open, the roof box 100 also cannot be turned for locking, through blocking of the coupling part 14 in the housing 12.

Although not shown in the figures, it is also possible to provide a manual variant, so that a user, after locking the locking systems, must move the handgrip, no longer blocked in the second position, manually back to the first position of the handgrip 7.

If the roof box 100 is closed, it can be turned for locking by means of the lock 23 and the key 19. Rotation of the key 19 in the direction indicated in Fig. 2c by arrow VII ensures rotation on a lock component 15 that comprises a catch 31 that moves the coupling part 14 down, i.e. downwards in the height direction H, so that the coupling part 14 will no longer hook onto the handgrip part 20. The handgrip part 20 may, in the handgrip mechanism 55 that is locked, move freely in the direction indicated by arrow VIII (Fig. 2c) without operating the strip 6. The handgrip 7 will always be returned, by the torsion spring 18, to the starting position, i.e. the first position. If the system is turned by means of the key 19 of the lock 23, the catch 31 on a lock component 15 ensures that the coupling part 14 moves upwards, i.e. in the height direction H, as a result the coupling part 14 will again hook onto the handgrip part 20, so that the handgrip mechanism 55 can again be operated by a user, by means of the handgrip 7, to open the lid 1 relative to the bottom part 2 of the roof box 100.

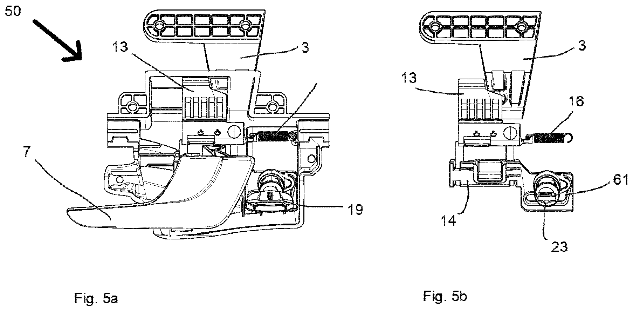

In Figs. 5a-7b this is further visualized by showing the different states of the lock 23 combined with the two different positions of the handgrip 7.

Figs. 5a,b show a closed lock 23 and the handgrip 7 in the first position. When a lock 23 is locked, movement of the handgrip 7 from the first to the second position is possible, as shown by arrow VIII in Fig. 2c, without unlocking the lid part 1 and the bottom part 2. If the handgrip 7 is closed by means of the lock, the handgrip 7 moved by a user from the first position to the second position will be moved automatically by means of spring tension of spring 18 from the second position back again to the first position.

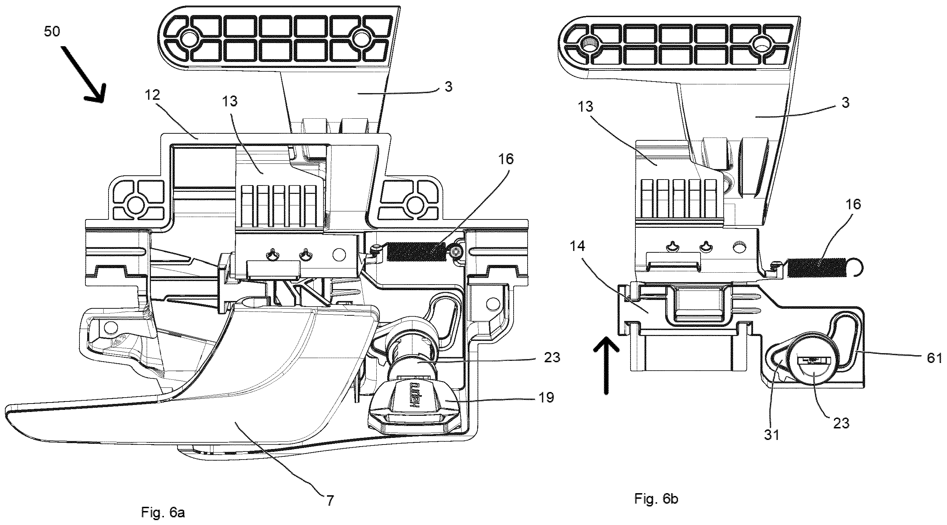

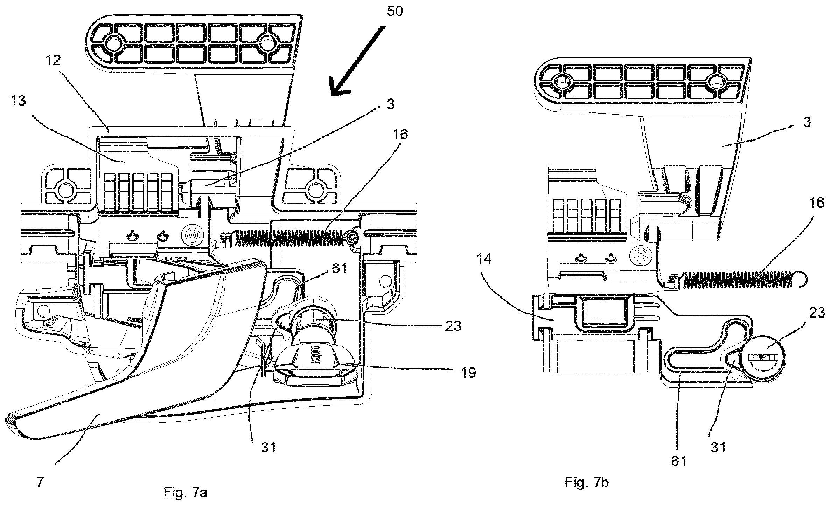

Figs. 6a,b show an opened lock 23 and the handgrip 7 in the first position, and Figs. 7a,b show an opened lock 23 and the handgrip 7 in the second position. Comparison of Figs. 5a,b with Figs. 6a,b, 7a,b shows that by opening the lock 23, the coupling part 14 is moved upwards in the direction indicated by the arrow in Fig. 6b, so that the coupling part 14 is coupled with the handgrip part 20 as explained above. The lock component 15 with the catch is located movably in a slot 61 of the coupling part 14, wherein by closing the lock 23 the catch is movable in the slot to an uncoupling position (Figs. 5a,b), so that the handgrip 7 and the strip 6 are uncoupled, whereas opening of the lock 23 moves the catch 31 in the slot to a coupling position, wherein the coupling part 14 moves upwards so that the handgrip and the strip are coupled by hooking into each other, so that opening of the roof box is possible through operation of the handgrip by a user.

Roof box provided with a bottom part, a lid part, as well as a first locking system and a second locking system at some distance from the first locking system, both of which comprise a locking function for locking and unlocking the bottom part with the lid part, the first locking system and the second locking system are connected together by a slidable oblong connecting element, wherein the first or the second locking system is provided with an operating element coupled to the slidable connecting element, which when operated by a user is movable from a first position in which the bottom part and the lid part are locked together by means of the first locking system and the second locking system, to a second position whereby the slidable oblong connecting element moves from a locking position to an unlocking position for unlocking the first and the second locking system so that the bottom part is unlocked from the lid part, wherein the operating element can be locked in the first position by means of a lock, wherein if the operating element is locked by means of the lock, movement of the operating element from the first to the second position does not provide unlocking of the lid part and the bottom part. The operating element may optionally be the handgrip that is described in this document. The operating element and the lock are also located some distance apart. The lock may be configured as described herein for uncoupling and coupling the operating element with the oblong slidable connecting element. The roof box described in this paragraph may also be combined with other features/aspects that are described in this document.

## Claims

1. Roof box (100) provided with a bottom part (2), a lid part (1), as well as a first locking system (40) and a second locking system (50) at some distance from the first locking system, both of which comprise a locking function for locking and unlocking the bottom part with the lid part, the first locking system (40) and the second locking system (50) are connected together by a slidable oblong connecting element (6), wherein the first (40) or the second (50) locking system is provided with a handgrip (7) coupled to the slidable connecting element (6), which when operated by a user is turned about an axis from a first position in which the bottom part (2) and the lid part (1) are locked together by means of the first locking system (40) and the second locking system (50), to a second position whereby the slidable oblong connecting element (6) moves from a locking position to an unlocking position for unlocking the first (40) and the second (50) locking system so that the bottom part (2) is unlocked from the lid part (1), **characterised in that** the handgrip (7) is an oblong handgrip (7) which comprises an end (7a) located near the axis as well as an end (7b) located farther from the axis, wherein in the unlocked position of the first (40) and/or the second (50) locking system the handgrip (7) is blocked in the second position.

2. Roof box (100) according to Claim 1, wherein in the first position of the handgrip (7) the distance between a side wall (1a, 2a) of the roof box and the end (7b) of the handgrip (7) remote from the axis is less than in the second position of the handgrip (7).

3. Roof box (100) according to Claim 1, wherein in the first position the handgrip (7) extends in the plane of the side wall (1a, 2a), wherein in the second position the handgrip extends relative to the side wall of the roof box at an angle, preferably an angle between 20 and 90 degrees relative to the side wall of the roof box.

4. Roof box (100) according to one of the preceding claims, wherein two opposite side walls (1a,b; 2a,b) of the roof box are each provided with the first (40) and the second (50) locking system, wherein the first (40) and the second (50) locking system further comprise a hinge function on each side wall, so that the lid part (1) on one of the two side walls can be hinged via the hinge function of the first and the second locking system on the side wall located opposite relative to the bottom part (2), for opening/closing the roof box.

5. Roof box (100) according to one of the preceding claims, wherein the roof box further comprises a third locking system (40), wherein the first (40) and the third (40) locking system are of identical configuration and the second locking system (50) is of a different configuration from the first locking system (40), in that the second locking system (50) is provided with the handgrip (7).

6. Roof box (100) according to one of the preceding claims, wherein during unlocking of the first (40) and the second (50) locking system, the lid part (1) moves under spring tension relative to the bottom part (2) from a closed position to an opened position of the roof box.

7. Roof box (100) according to one of the preceding claims, wherein by locking at least by means of the first locking system (40) and the second locking system (50) the bottom part (2) with the lid part (1), by closing the open roof box the handgrip (7) is movable automatically or manually from the second position to the first position.

8. Roof box (100) according to one of the preceding claims, wherein if the bottom part (2) is unlocked from the lid part (1), the handgrip (7) is blocked in the second position by means of spring tension and/or the slidable oblong connecting element (6).

9. Roof box (100) according to one of the preceding claims, wherein closing of the open roof box moves the slidable oblong connecting element (6) from the unlocking position to the locking position, wherein the handgrip (7) is movable from the second position to the first position automatically by means of the slidable oblong connecting element (6).

10. Roof box (100) according to Claim 9, wherein the slidable oblong connecting element (6) moves from the unlocking position to the locking position by means of spring tension.

11. Roof box (100) according to one of the preceding claims, wherein operation of the handgrip (7) by rotation from the first position to the second position provides simultaneous unlocking of the first (40) and the second (50) locking system by means of the slidable oblong connecting element (6), and complete closing of the open roof box provides simultaneous locking of the first (40) and the second (50) locking system by means of the slidable oblong connecting element (6).

12. Roof box (100) according to one of the preceding claims, wherein the handgrip (7) is lockable in the first position by means of a lock (23), wherein if the handgrip is locked by means of the lock, movement of the handgrip from the first to the second position does not provide unlocking of the lid part (1) and the bottom part (2).

13. Roof box (100) according to Claim 12, wherein if the handgrip (7) is locked by means of the lock (23), the handgrip moved by a user from the first position to the second position moves automatically by spring tension from the second position to the first position.

14. Roof box (100) according to Claim 12 or 13, wherein the lock (23) is provided with a lock component (15) with a catch (31) that is located movably in a slot (61) of a coupling part (14) between the handgrip (7) and the connecting element (6), wherein by closing the lock (23), the catch is moved in the slot to an uncoupling position so that the handgrip and the connecting element are uncoupled, whereas opening the lock moves the catch in the slot to a coupling position so that the handgrip and the connecting element are coupled for opening the roof box through operation of the handgrip by a user.

## Patentansprüche

1. Dachkoffer (100), der mit einem Bodenteil (2), einem Deckelteil (1) sowie einem ersten Verriegelungssystem (40) und einem vom ersten Verriegelungssystem beabstandeten zweiten Verriegelungssystem (50), die beide eine Verriegelungsfunktion zum Verriegeln und Entriegeln des Bodenteils mit dem Deckelteil umfassen, versehen ist, wobei das erste Verriegelungssystem (40) und das zweite Verriegelungssystem (50) über ein verschiebbares längliches Verbindungselement (6) miteinander verbunden sind, wobei das erste (40) oder das zweite (50) Verriegelungssystem mit einem Handgriff (7) versehen ist, der mit dem verschiebbaren Verbindungselement (6) gekoppelt ist, das, wenn es von einem Anwender betätigt wird, von einer ersten Stellung, in der der Bodenteil (2) und der Deckelteil (1) mittels des ersten Verriegelungssystems (40) und des zweiten Verriegelungssystems (50) miteinander verriegelt sind, in eine zweite Stellung um eine Achse gedreht wird, wobei sich das verschiebbare längliche Verbindungselement (6) von einer Verriegelungsstellung in eine Entriegelungsstellung bewegt, um das erste (40) und das zweite (50) Verriegelungssystem zu entriegeln, sodass der Bodenteil (2) vom Deckelteil (1) entriegelt wird, **dadurch gekennzeichnet, dass** der Handgriff (7) ein länglicher Handgriff (7) ist, der ein Ende (7a), das in der Nähe der Achse angeordnet ist, sowie ein Ende (7b), das von der Achse weiter entfernt ist, umfasst, wobei der Handgriff (7) in der Entriegelungsstellung des ersten (40) und/oder des zweiten (50) Verriegelungssystems in der zweiten Stellung blockiert ist.

2. Dachkoffer (100) nach Anspruch 1, wobei der Abstand zwischen einer Seitenwand (1a, 2a) des Dachkoffers und dem von der Achse entfernten Ende (7b) des Handgriffs (7) in der ersten Stellung des Handgriffs (7) kleiner ist als in der zweiten Stellung des Handgriffs (7).

3. Dachkoffer (100) nach Anspruch 1, wobei sich der Handgriff (7) in der ersten Stellung in der Ebene der Seitenwand (1a, 2a) erstreckt, wobei sich der Handgriff in der zweiten Stellung in Bezug zur Seitenwand des Dachkoffers in einem Winkel erstreckt, der vorzugsweise ein Winkel zwischen 20 und 90 Grad in Bezug zur Seitenwand des Dachkoffers ist.

4. Dachkoffer (100) nach einem der vorstehenden Ansprüche, wobei zwei entgegengesetzte Wände (1a,b; 2a,b) des Dachkoffers jeweils mit dem ersten (40) und dem zweiten (50) Verriegelungssystem versehen sind, wobei das erste (40) und das zweite (50) Verriegelungssystem ferner eine Scharnierfunktion an jeder Seitenwand umfassen, sodass der Deckelteil (1) an einer der zwei Seitenwände relativ zum Bodenteil (2) über die Scharnierfunktion des ersten und des zweiten Verriegelungssystems an der gegenüberliegenden Seitenwand zum Öffnen/Schließen des Dachkoffers gelenkig befestigt werden kann.

5. Dachkoffer (100) nach einem der vorstehenden Ansprüche, wobei der Dachkoffer ferner ein drittes Verriegelungssystem (40) umfasst, wobei das erste (40) und das dritte (40) Verriegelungssystem identisch konfiguriert sind und das zweite Verriegelungssystem (50) im Vergleich zum ersten Verriegelungssystem (40) anders konfiguriert ist, und zwar dadurch, dass das zweite Verriegelungssystem (50) mit dem Handgriff (7) versehen ist.

6. Dachkoffer (100) nach einem der vorstehenden Ansprüche, wobei sich während des Entriegelns des ersten (40) und des zweiten (50) Verriegelungssystems der Deckelteil (1) unter Federspannung in Bezug zum Bodenteil (2) von einer geschlossenen Stellung in eine geöffnete Stellung des Dachkoffers bewegt.

7. Dachkoffer (100) nach einem der vorstehenden Ansprüche, wobei durch Verriegeln des Bodenteils (2) mit dem Deckelteil (1) zumindest mittels des ersten Verriegelungssystems (40) und des zweiten Verriegelungssystems (50), durch Schließen des offenen Dachkoffers der Handgriff (7) automatisch oder manuell von der zweiten Stellung in die erste Stellung beweglich ist.

8. Dachkoffer (100) nach einem der vorstehenden Ansprüche, wobei, wenn der Bodenteil (2) vom Deckelteil (1) entriegelt ist, der Handgriff (7) in der zweiten Stellung mittels Federspannung und/oder des verschiebbaren länglichen Verbindungselements (6) blockiert ist.

9. Dachkoffer (100) nach einem der vorstehenden Ansprüche, wobei das Schließen des offenen Dachkoffers das verschiebbare längliche Verbindungselement (6) von der Entriegelungsstellung in die Verriegelungsstellung bewegt, wobei der Handgriff (7) mittels des verschiebbaren länglichen Verbindungselements (6) automatisch von der zweiten Stellung in die erste Stellung beweglich ist.

10. Dachkoffer (100) nach Anspruch 9, wobei sich das verschiebbare längliche Verbindungselement (6) mittels Federspannung von der Entriegelungsstellung in die Verriegelungsstellung bewegt.

11. Dachkoffer (100) nach einem der vorstehenden Ansprüche, wobei die Betätigung des Handgriffs (7) durch Drehung von der ersten Stellung in die zweite Stellung das gleichzeitige Entriegeln des ersten (40) und des zweiten (50) Verriegelungssystems mittels des verschiebbaren länglichen Verbindungselements (6) vorsieht und das vollständige Schließen des offenen Dachkoffers das gleichzeitige Verriegeln des ersten (40) und des zweiten (50) Verriegelungssystems mittels des verschiebbaren länglichen Verbindungselements (6) vorsieht.

12. Dachkoffer (100) nach einem der vorstehenden Ansprüche, wobei der Handgriff (7) in der ersten Stellung mittels eines Schlosses (23) verriegelbar ist, wobei, wenn der Handgriff mittels des Schlosses verriegelt ist, die Bewegung des Handgriffs von der ersten in die zweite Stellung den Deckelteil (1) nicht vom Bodenteil (2) entriegelt.

13. Dachkoffer (100) nach Anspruch 12, wobei, wenn der Handgriff (7) mittels des Schlosses (23) verriegelt ist, sich der von einem Anwender von der ersten Stellung in die zweite Stellung bewegte Handgriff durch Federspannung automatisch von der zweiten Stellung in die erste Stellung bewegt.

14. Dachkoffer (100) nach Anspruch 12 oder 13, wobei das Schloss (23) mit einer Verriegelungskomponente (15) mit einer Sperrklinke (31), die sich beweglich in einem Schlitz (61) eines Kopplungsteils (14) zwischen dem Handgriff (7) und dem Verbindungselement (6) befindet, versehen ist, wobei durch Schließen des Schlosses (23) die Sperrklinke im Schlitz in eine Entkopplungsstellung bewegt wird, sodass der Handgriff und das Verbindungselement entkoppelt werden, wohingegen das Öffnen des Schlosses die Sperrklinke im Schlitz in eine Kopplungsstellung bewegt, sodass der Handgriff und das Verbindungselement gekoppelt sind, um den Dachkoffer durch die Betätigung des Handgriffs durch einen Anwender zu öffnen.

## Revendications

1. Coffre de toit (100) pourvu d'une partie inférieure (2), d'une partie de couvercle (1), ainsi que d'un premier système de verrouillage (40) et d'un deuxième système de verrouillage (50) à une certaine distance du premier système de verrouillage, qui comprennent tous deux une fonction de verrouillage pour verrouiller et déverrouiller la partie inférieure avec la partie de couvercle, le premier système de verrouillage (40) et le deuxième système de verrouillage (50) sont reliés ensemble par un élément de liaison oblong coulissant (6), dans lequel le premier (40) ou le deuxième (50) système de verrouillage est pourvu d'une poignée (7) couplée à l'élément de liaison coulissant (6) qui, lorsqu'elle est actionnée par un utilisateur, est tournée autour d'un axe d'une première position dans laquelle la partie inférieure (2) et la partie de couvercle (1) sont verrouillées ensemble au moyen du premier système de verrouillage (40) et du deuxième système de verrouillage (50), à une deuxième position où l'élément de liaison oblong coulissant (6) passe d'une position de verrouillage à une position de déverrouillage pour déverrouiller le premier (40) et le deuxième (50) systèmes de verrouillage de sorte que la partie inférieure (2) soit déverrouillée de la partie de couvercle (1), **caractérisé en ce que** la poignée (7) est une poignée oblongue (7) qui comprend une extrémité (7a) située près de l'axe ainsi qu'une extrémité (7b) située plus loin de l'axe, dans lequel, dans la position déverrouillée du premier (40) et/ou du deuxième (50) système de verrouillage la poignée (7) est bloquée dans la deuxième position.

2. Coffre de toit (100) selon la revendication 1, dans lequel dans la première position de la poignée (7) la distance entre une paroi latérale (1a, 2a) du coffre de toit et l'extrémité (7b) de la poignée (7) éloignée de l'axe est inférieure à celle dans la deuxième position de la poignée (7).

3. Coffre de toit (100) selon la revendication 1, dans lequel dans la première position la poignée (7) s'étend dans le plan de la paroi latérale (1a, 2a), dans lequel dans la deuxième position la poignée s'étend par rapport à la paroi latérale du coffre de toit selon un angle, de préférence un angle compris entre 20 et 90 degrés par rapport à la paroi latérale du coffre de toit.

4. Coffre de toit (100) selon l'une des revendications précédentes, dans lequel chacune des deux parois latérales opposées (1a, b ; 2a, b) du coffre de toit est pourvue du premier (40) et du deuxième (50) systèmes de verrouillage, dans lequel le premier (40) et le deuxième (50) systèmes de verrouillage comprennent en outre une fonction d'articulation sur chaque paroi latérale, de sorte que la partie de couvercle (1) sur l'une des deux parois latérales puisse être articulée par rapport à la partie inférieure (2) via la fonction d'articulation du premier et du deuxième systèmes de verrouillage sur la paroi latérale située à l'opposé, pour ouvrir/fermer le coffre de toit.

5. Coffre de toit (100) selon l'une des revendications précédentes, dans lequel le coffre de toit comprend en outre un troisième système de verrouillage (40), dans lequel le premier (40) et le troisième (40) systèmes de verrouillage sont de configuration identique et le deuxième système de verrouillage (50) est d'une configuration différente du premier système de verrouillage (40), en ce que le deuxième système de verrouillage (50) est pourvu de la poignée (7).

6. Coffre de toit (100) selon l'une des revendications précédentes, dans lequel lors du déverrouillage du premier (40) et du deuxième (50) systèmes de verrouillage, la partie de couvercle (1) se déplace sous la tension d'un ressort par rapport à la partie inférieure (2) d'une position fermée à une position ouverte du coffre de toit.

7. Coffre de toit (100) selon l'une des revendications précédentes, dans lequel en verrouillant au moins au moyen du premier système de verrouillage (40) et du deuxième système de verrouillage (50) la partie inférieure (2) avec la partie de couvercle (1), en fermant le coffre de toit ouvert, la poignée (7) peut être déplacée automatiquement ou manuellement de la deuxième position à la première position.

8. Coffre de toit (100) selon l'une des revendications précédentes, dans lequel si la partie inférieure (2) est déverrouillée de la partie de couvercle (1), la poignée (7) est bloquée dans la deuxième position au moyen de la tension du ressort et /ou de l'élément de liaison oblong coulissant (6).

9. Coffre de toit (100) selon l'une des revendications précédentes, dans lequel la fermeture du coffre de toit ouvert déplace l'élément de liaison oblong coulissant (6) de la position de déverrouillage à la position de verrouillage, dans lequel la poignée (7) peut être déplacée de la deuxième position à la première position automatiquement au moyen de l'élément de liaison oblong coulissant (6).

10. Coffre de toit (100) selon la revendication 9, dans lequel l'élément de liaison oblong coulissant (6) se déplace de la position de déverrouillage à la position de verrouillage au moyen de la tension d'un ressort.

11. Coffre de toit (100) selon l'une des revendications précédentes, dans lequel l'actionnement de la poignée (7) par rotation de la première position à la deuxième position assure le déverrouillage simultané du premier (40) et du deuxième (50) systèmes de verrouillage au moyen de l'élément de liaison oblong coulissant (6), et la fermeture complète du coffre de toit ouvert assure le verrouillage simultané du premier (40) et du deuxième (50) systèmes de verrouillage au moyen de l'élément de liaison oblong coulissant (6).

12. Coffre de toit (100) selon l'une des revendications précédentes, dans lequel la poignée (7) est verrouillable dans la première position au moyen d'un verrou (23), dans lequel si la poignée est verrouillée au moyen du verrou, le mouvement de la poignée de la première à la deuxième position n'assure pas le déverrouillage de la partie de couvercle (1) et de la partie inférieure (2).

13. Coffre de toit (100) selon la revendication 12, dans lequel si la poignée (7) est verrouillée au moyen du verrou (23), la poignée déplacée par un utilisateur de la première position à la deuxième position se déplace automatiquement par la tension d'un ressort de la deuxième position à la première position.

14. Coffre de toit (100) selon la revendication 12 ou 13, dans lequel le verrou (23) est pourvu d'un composant de verrou (15) avec un loquet (31) qui est situé de manière mobile dans une fente (61) d'une partie d'accouplement (14) entre la poignée (7) et l'élément de liaison (6), dans lequel en fermant le verrou (23), le loquet est déplacé dans la fente vers une position de désaccouplement de sorte que la poignée et l'élément de liaison soient désaccouplés, tandis que l'ouverture du verrou déplace le loquet dans la fente vers une position d'accouplement de sorte que la poignée et l'élément de liaison soient couplés pour ouvrir le coffre de toit par l'actionnement de la poignée par un utilisateur.
